# EUROPEAN PATENT APPLICATION

(11) **EP 3 911 107 A1**
(43) Date of publication of application: **17.11.2021**
(21) Application number: 20738034.6
(22) Date of filing: 10.01.2020
(51) Int. Cl.: H04W 76/10

(54) **CONNECTION ESTABLISHING METHOD, TERMINAL DEVICE, AND NETWORK DEVICE**

(30) Priority: 11.01.2019 CN 201910028434
(71) Applicant: VIVO MOBILE COMMUNICATION CO., LTD., Dongguan, Guangdong 523860 (CN)
(72) Inventor: LIANG, Jing, Dongguan, Guangdong 523860 (CN); JI, Zichao, Dongguan, Guangdong 523860 (CN); ZHENG, Qian, Dongguan, Guangdong 523860 (CN); LIU, Siqi, Dongguan, Guangdong 523860 (CN); WANG, Wen, Dongguan, Guangdong 523860 (CN)
(74) Representative: Lavoix
(86) International application number: PCT/CN2020/071371
(87) International publication number: WO 2020/143754

(57) **Abstract**

The present disclosure provides a connection establishment method, a terminal device, and a network device, where the connection establishment method includes: sending a first request message to a network device, where the first request message is used to request, from the network device, related information of a unicast connection between the first terminal device and a second terminal device; and receiving a first response message sent by the network device.

## Description

### CROSS-REFERENCE TO RELATED APPLICATIONS

This application claims priority to Chinese Patent Application No. 201910028434.5, filed on January 11, 2019 in China, which is incorporated herein by reference in its entirety.

### TECHNICAL FIELD

The present disclosure relates to the field of communications technologies, and in particular to a connection establishment method, a terminal device, and a network device.

### BACKGROUND

Sidelink (sidelink) transmission in a long term evolution(Long Term Evolution, LTE) system is based on broadcast. There is no point-to-point connection established between terminal devices such as user equipments (User Equipment, UE) at the physical layer, and there is no feedback mechanism. Receiving-end UE does not feed back to transmitting-end UE whether reception is successful, nor does it perform channel measurement or feed back a measurement result.

In vehicle-to-everything (Vehicle to everything, V2X) communication of a new radio (New Radio, NR) system, it is considered to support a plurality of transmission manners, including unicast, multicast, and broadcast. Sidelink unicast connection establishment between UEs may be achieved only by an upper layer, or there may be an access (Access stratum, AS) unicast connection establishment process.

However, in related solutions, it is not yet possible to achieve unicast connection establishment between UEs.

### SUMMARY

Embodiments of the present disclosure provide a connection establishment method, a terminal device, and a network device, to resolve a problem that unicast connection establishment between terminal devices cannot be achieved in the related solutions.

To resolve the foregoing technical problem, the embodiments of the present disclosure are implemented as follows:

According to a first aspect, some embodiments of the present disclosure provide a connection establishment method, applied to a first terminal device and including:
sending a first request message to a network device, where the first request message is used to request, from the network device, related information of a unicast connection between the first terminal device and a second terminal device; and
receiving a first response message sent by the network device.

According to a second aspect, some embodiments of the present disclosure further provide a connection establishment method, applied to a transmitting-end device and including:
sending a unicast connection establishment request message to a receiving-end device, where the unicast connection establishment request message includes a direct communication request message, and the unicast connection establishment request message is used to request related information of a unicast connection between the transmitting-end device and the receiving-end device;
receiving a unicast connection establishment message sent by the receiving-end device, where the unicast connection establishment message includes a direct communication accept message;
sending a resource request message to a network device; and
receiving an RRC configuration message sent by the network device.

According to a third aspect, some embodiments of the present disclosure further provide a connection establishment method, applied to a network device and including:
receiving a first request message sent by a first terminal device, where the first request message is used to request, from the network device, related information of a unicast connection between the first terminal device and a second terminal device; and sending a first response message to the first terminal device.

According to a fourth aspect, some embodiments of the present disclosure further provide a first terminal device, including: a first sending module configured to send a first request message to a network device, where the first request message is used to request, from the network device, related information of a unicast connection between the first terminal device and a second terminal device; and
a first receiving module configured to receive a first response message sent by the network device.

According to a fifth aspect, some embodiments of the present disclosure further provide a transmitting-end device, including:
a second sending module configured to send a unicast connection establishment request message to a receiving-end device, where the unicast connection establishment request message includes a direct communication request message, and the unicast connection establishment request message is used to request related information of a unicast connection between the transmitting-end device and the receiving-end device;
a second receiving module configured to receive a unicast connection establishment message sent by the receiving-end device, where the unicast connection establishment message includes a direct communication accept message;
a third sending module configured to send a resource request message to a network device; and
a third receiving module configured to receive an RRC configuration message sent by the network device.

According to a sixth aspect, some embodiments of the present disclosure further provide a network device, including:
a fourth receiving module configured to receive a first request message sent by a first terminal device, where the first request message is used to request, from the network device, related information of a unicast connection between the first terminal device and a second terminal device; and
a fourth sending module configured to send a first response message to the first terminal device.

According to a seventh aspect, some embodiments of the present disclosure further provide a terminal device, including a memory, a processor, and a computer program stored on the memory and executable by the processor, where when the computer program is executed by the processor, the steps of the foregoing connection establishment method applied to a first terminal device or a transmitting-end device are implemented.

According to an eighth aspect, some embodiments of the present disclosure further provide a network device, including a memory, a processor, and a computer program stored on the memory and executable by the processor, where when the computer program is executed by the processor, the steps of the foregoing connection establishment method applied to a network device are implemented.

According to a ninth aspect, some embodiments of the present disclosure further provide a computer-readable storage medium having a computer program stored thereon, where when the computer program is executed by a processor, the steps of the foregoing connection establishment method applied to a first terminal device or a transmitting-end device or the steps of the foregoing connection establishment method applied to a network device are implemented.

In some embodiments of the present disclosure, the first terminal device sends the first request message to the network device, the first request message being used to request, from the network device, the related information of the unicast connection between the first terminal device and the second terminal device; and receives the first response message sent by the network device, such that the establishment of the unicast connection between the terminal devices and the configuration of resources for a corresponding terminal device can be implemented with the participation of the network device.

### BRIEF DESCRIPTION OF DRAWINGS

To describe the technical solutions in some embodiments of the present disclosure more clearly, the following briefly describes the accompanying drawings required in some embodiments of the present disclosures. Apparently, the accompanying drawings in the following description show merely some embodiments of the present disclosure, and a person of ordinary skill in the art may still derive other drawings from these accompanying drawings without creative efforts.
FIG. 1 is a flowchart of a connection establishment method according to some embodiments of the present disclosure;
FIG. 2 is another flowchart of a connection establishment method according to some embodiments of the present disclosure;
FIG. 3 is another flowchart of a connection establishment method according to some embodiments of the present disclosure;
FIG. 4 is a schematic interworking diagram of a unicast connection establishment process according to a specific embodiment of the present disclosure;
FIG. 5 is a schematic structural diagram 1 of a terminal device according to some embodiments of the present disclosure;
FIG. 6 is a schematic structural diagram 2 of a terminal device according to some embodiments of the present disclosure;
FIG. 7 is a schematic structural diagram 1 of a network device according to some embodiments of the present disclosure;
FIG. 8 is a schematic structural diagram 3 of a terminal device according to some embodiments of the present disclosure; and
FIG. 9 is a schematic structural diagram 2 of a network device according to some embodiments of the present disclosure.

### DETAILED DESCRIPTION OF EMBODIMENTS

To describe the technical solutions in the embodiments of the present disclosure more clearly, the following briefly describes the accompanying drawings required in the embodiments of the present disclosure. Apparently, the accompanying drawings in the following descriptions show merely some embodiments of the present disclosure, and a person of ordinary skill in the art may still derive other accompanying drawings from these accompanying drawings without creative efforts.

Terms "first", "second", etc. in the description and claims of this application are used to distinguish similar objects, instead of describing a specific sequence or order. It should be understood that the data termed in such a way is interchangeable in proper circumstances so that the embodiments of this application described herein can be implemented in an order other than the order illustrated or described herein. Moreover, the terms "include", "have" and any variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device. "And/or" used in the specification and claims means at least one of the connected objects.

The technology described herein is not limited to a long term evolution (Long Time Evolution, LTE)/LTE-Advanced (LTE-Advanced, LTE-A) system, and can also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably. A CDMA system may implement a radio technology such as CDMA2000 or universal terrestrial radio access (Universal Terrestrial Radio Access, UTRA). UTRA includes wideband CDMA (Wideband Code Division Multiple Access, WCDMA) and other CDMA variants. A TDMA system may implement a radio technology such as a global system for mobile communications (Global System for Mobile Communication, GSM). An OFDMA system may implement a radio technology such as ultra mobile broadband (Ultra Mobile Broadband, UMB), evolved UTRA (evolved-UTRA, E-UTRA), IEEE 802.11 (Wi-Fi), IEEE 802.16 (WiMAX), IEEE 802.20, or Flash-OFDM. UTRA and E-UTRA are parts of a universal mobile telecommunications system (Universal Mobile Telecommunications System, UMTS). LTE and more advanced LTE (such as LTE-A) are new UMTS versions that use E-UTRA. UTRA, E-UTRA, UMTS, LTE, LTE-A, and GSM are described in documents from the organization named the "3rd generation partnership project" (3rd Generation Partnership Project, 3GPP). CDMA2000 and UMB are described in documents from the organization named the "3rd Generation Partnership Project 2" (3GPP2). The technology described herein can be used in the above-mentioned systems and radio technologies as well as other systems and radio technologies. However, an NR system is described in the following description for illustrative purposes, and an NR terminology is used in most of the following description. Persons skilled in the art may understand that, the embodiments are merely examples rather than limitations, and the technical solutions of the embodiments of the present disclosure can also be applied to applications other than the NR system application.

The following description provides examples and does not limit the scope, applicability, or configuration set forth in the claims. The functions and arrangements of the elements under discussion may be changed without departing from the spirit and scope of the present disclosure. In various examples, various procedures or components may be omitted, replaced, or added appropriately. For example, the described method may be performed in an order different from that described, and steps may be added, omitted, or combined. In addition, features described with reference to some examples may be combined in other examples.

A wireless communications system in the embodiments of the present disclosure includes a terminal device and a network device. The terminal device may be referred to as a terminal or user equipment (User Equipment, UE), and the terminal may be a terminal side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal is not limited in some embodiments of the present disclosure. The network device may be a base station or a core network, where the above-mentioned base station may be a base station of a 5G or later release (for example: a gNB or a 5G NR NB), or base stations (for example: an eNB, a WLAN access point, or other access point) in other communications systems.

The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, or another appropriate term in the art. Provided that the same technical effects are achieved, the base station is not limited to specific technical terms. It should be noted that in some embodiments of the present disclosure, the base station in the NR system is merely used as an example, but does not limit a specific type of the base station.

In some embodiments of the present disclosure, a first terminal device may be a transmitting-end device, and a corresponding second terminal device is a receiving-end device; or the first terminal device may be a receiving-end device, and the corresponding second terminal device is a receiving-end device. The above-mentioned transmitting-end device may be understood as a device that has a unicast connection establishment requirement and initiates a unicast connection, and this unicast connection may be specifically a sidelink unicast connection.

Resource modes of the transmitting-end device and the receiving-end device may be a mode 1 and/or a mode 2, which is not limited in some embodiments of the present disclosure. In the model 1, the network device schedules resources, while in the mode 2, the terminal device selects resources itself. A (NR sidelink) unicast connection establishment process in some embodiments of the present disclosure can be extended to an NR sidelink multicast connection establishment process, for the establishment of a connection between any two terminal devices in multicast.

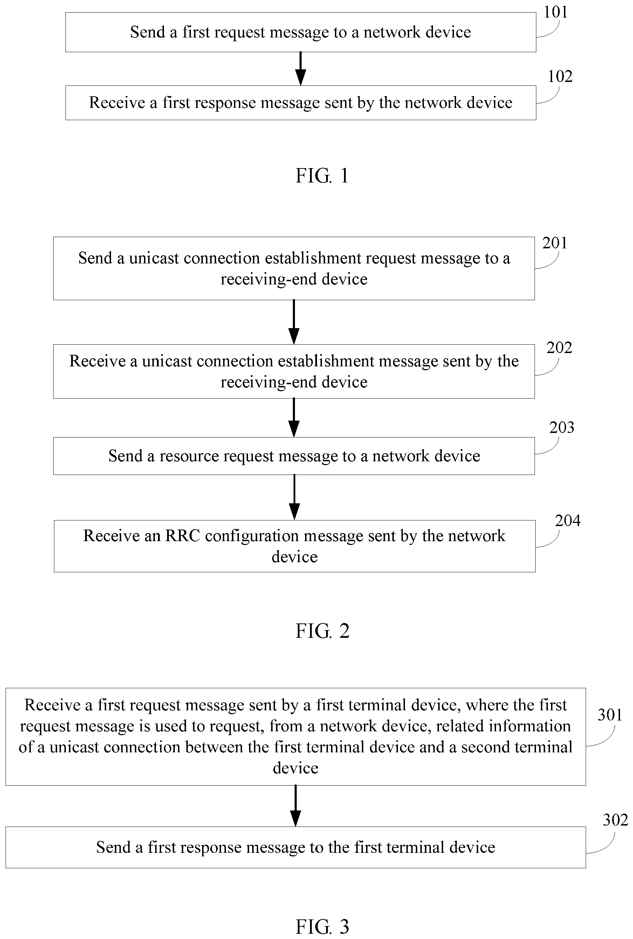

Referring to FIG. 1, FIG. 1 is a flowchart of a connection establishment method according to some embodiments of the present disclosure. The method is applied to a first terminal device, and as shown in FIG. 1, the method includes the following steps:
Step 101: Send a first request message to a network device.

The first request message is used to request, from the network device, related information of a unicast connection between the first terminal device and a second terminal device, such that the establishment of the corresponding unicast connection with the participation of the network device is implemented.

Step 102: Receive a first response message sent by the network device.

According to the connection establishment method of some embodiments of the present disclosure, the first terminal device sends the first request message to the network device, the first request message being used to request, from the network device, the related information of the unicast connection between the first terminal device and the second terminal device; and receives the first response message sent by the network device, such that the establishment of the unicast connection between the terminal devices and the configuration of resources for a corresponding terminal device can be implemented with the participation of the network device.

In some embodiments of the present disclosure, when the related information of the unicast connection is requested from the network device, there may be no AS unicast connection establishment process, or there may be an AS unicast connection establishment process. When there is no AS unicast connection establishment process, the first request message may be a resource request message; and when there is an AS unicast connection establishment process, that is, there is an AS unicast connection establishment process between terminal devices, the first request message may be a unicast connection establishment request message.

Optionally, when the first request message is a resource request message, the resource request message may include at least one of the following:
a target terminal ID;
a link ID of the unicast connection;
resource related information of a target terminal, where with the aid of this information, the network device can learn a resource status corresponding to the target terminal, which facilitates the configuration of resources by the network device;
quality of service (Quality of Service, QoS) parameter information, such as PC5 interface QoS parameter information, negotiated between the first terminal device and the second terminal device;
capability information of the target terminal;
physical cell ID (Physical Cell Identifier, PCI) and frequency information of the target terminal; a physical cell ID (PCI) of the target terminal; and
a cell global ID (Cell Global Identifier, CGI) of the target terminal, where
the target terminal is at least one of the first terminal device and the second terminal device.

Alternatively, when the first request message is a unicast connection establishment request message, the unicast connection establishment request message may include at least one of the following:
a target terminal ID;
a link ID of the unicast connection;
resource related information of a target terminal;
QoS parameter information, such as PC5 interface QoS parameter information, negotiated between the first terminal device and the second terminal device;
capability information of the target terminal;
physical cell ID (PCI) and frequency information of the target terminal;
a physical cell ID (PCI) of the target terminal;
a cell global ID (CGI) of the target terminal; and
a V2X unicast connection establishment request cause (cause), where
the target terminal is at least one of the first terminal device and the second terminal device.

In this way, with the aid of the resource request message or the unicast connection establishment request message, the network device can determine corresponding related information of the unicast connection for a corresponding terminal device, thereby completing a unicast connection process.

Optionally, the resource related information of the target terminal may include at least one of the following:
information about a resource mode in which the target terminal currently works;
information about a resource pool selected by the target terminal, for example, applicable to simultaneous work in a mode 1 and a mode 2;
information about a resource use status of the target terminal; and
information about a current radio resource control (Radio Resource Control, RRC) state of the target terminal.

Optionally, the QoS parameter information may include at least one of the following:
specific QoS parameters (such as latency, reliability, and the like), where there may be one or more sets of specific QoS parameters;
a 5th generation quality of service indicator (5-Generation QoS Indicator, 5QI), where there may one or more 5QIs; and
a voice quality indication (Voice Quality Indication, VQI), where there may be one or more VQIs, and the VQI is specially used for a 5QI of V2X.

In some embodiments of the present disclosure, when the first request message is a resource request message, the first response message may be an RRC configuration message; or when the first request message is a unicast connection establishment request message, the first response message may be a unicast connection establishment message. The first response message (namely, the RRC configuration message or the unicast connection establishment message) may include at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

In this way, with the aid of the above-mentioned RRC configuration message or the unicast connection establishment message, a corresponding terminal device can determine configuration information of the network device, thereby successfully completing the establishment of the unicast connection.

Optionally, the physical layer configuration information may include at least one of the following:
hybrid automatic repeat request (Hybrid Automatic Repeat reQuest, HARQ) configuration information; and
channel state information (Channel State Information, CSI) configuration information.

Optionally, the resource configuration information may include at least one of the following:
information about a transmitting resource for feedback control information of a sidelink, where with the aid of the information about the transmitting resource, a transmitting resource for feedback control information of a sidelink between terminal devices can be determined, which ensures an interaction process between the terminal devices;
information about a transmitting resource for control signaling; and
information about a transmitting resource for service data.

Optionally, the QoS parameter information may include at least one of the following:
specific QoS parameters (such as latency, reliability, and the like), where there may be one or more sets of specific QoS parameters;
5QI, where there may be one or more 5QIs; and
VQI, where there may be one or more VQIs, and the VQI is specially used for a 5QI of V2X.

Optionally, the radio bearer configuration information may include at least one of the following:
addition information of a radio bearer;
deletion information of the radio bearer;
a bearer ID of the radio bearer;
media access control (Media Access Control, MAC) layer related configuration information of the radio bearer;
radio link control (Radio Link Control, RLC) layer related configuration information of the radio bearer;
packet data convergence protocol (Packet Data Convergence Protocol, PDCP) layer related configuration information of the radio bearer; and
security configuration information, where
the radio bearer is at least one of a signaling radio bearer (signalling radio bearers, SRB) and a data radio bearer (Data radio bearers, DRB).

Optionally, the MAC layer related configuration information may include at least one of the following:
buffer status report (Buffer Status Report, BSR) related configuration information;
scheduling request (Scheduling Request, SR) related configuration information;
power headroom related configuration information;
a logical channel ID; and
logical channel related configuration information.

In some embodiments of the present disclosure, after the first terminal device sends the first request message to the network device, the network device may send configuration information to the second terminal device, or may not send the configuration information to the second terminal device, and depending on whether the configuration information is sent, the first terminal device may perform different operations.

Optionally, when the network device does not send configuration information to the second terminal device, the method may further include:
sending, by the first terminal device, a second RRC message to the second terminal device, where
the second RRC message may include at least one of the following:
   radio bearer configuration information of a target terminal;
   resource configuration information of the second terminal device;
   physical layer configuration information of the second terminal device;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

Alternatively, when the network device sends a first RRC message, that is, configuration information, to the second terminal device, the method may further include:
sending, by the first terminal device, a third RRC message to the second terminal device, where
the first RRC message may include at least one of the following:
   resource configuration information of the second terminal device; and
   physical layer configuration information of the second terminal device; and
the third RRC message may include at least one of the following:
   radio bearer configuration information of a target terminal;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

It should be noted that for the content included in the radio bearer configuration information, the resource configuration information, and the physical layer configuration information in the first RRC message, reference may be made to the foregoing description; for the content included in the resource configuration information and the physical layer configuration information in the second RRC message, reference may be made to the foregoing description; and for the content included in the radio bearer configuration information in the third RRC message, reference may be made to the foregoing description. Details are not described herein again.

In some embodiments of the present disclosure, the target terminal ID, namely, the first terminal device ID or the second terminal device ID, may include at least one of the following:
an upper-layer ID, a layer 2 ID, a physical layer ID, an international mobile subscriber identity (International Mobile Subscriber Identification Number, IMSI), a 5G-S-TMSI, a source Source ID, and a destination Destination ID.

In some embodiments of the present disclosure, optionally, when the first request message is a resource request message, the first response message may be an RRC reject message; or when the first request message is a unicast connection establishment request message, the first response message may be a unicast connection reject message. The first response message (namely, the RRC reject message or the unicast connection reject message) may include at least one of the following:
indication information indicating whether to reject QoS, where with the aid of this information, a corresponding terminal device can determine whether the network device rejects the unicast connection between the corresponding terminal devices;
a connection reject cause (cause); and
information about a wait time (wait time).

Further, when receiving the RRC reject message or the unicast connection reject message, the first terminal device may send an upper layer connection release message or a unicast connection establishment failure message to the second terminal device, so that the second terminal device learns a current unicast connection status.

In some embodiments of the present disclosure, when the first terminal device is a transmitting-end device, and the second terminal device is a receiving-end device, before step 101, the method may further include:
sending a direct communication request message to the second terminal device; and
receiving a direct communication accept message sent by the second terminal device;
   or
before step 101, the method may further include:
   sending, to the network device, a direct communication request message for the second terminal device; and
   receiving a direct communication accept message of the second terminal device for the first terminal device that is sent by the network device;
      or
   when the first request message is a unicast connection establishment request message and the first response message is a unicast connection establishment message, the unicast connection establishment request message includes a direct communication request message, and the unicast connection establishment message includes a direct communication accept message.

Optionally, when the first terminal device is a receiving-end device, and the second terminal device is a transmitting-end device, before step 101, the method may further include:
receiving a direct communication request message sent by the second terminal device; and
after step 102, the method may further include:
   sending a direct communication accept message to the second terminal device; or
before step 101, the method may further include:
   receiving a direct communication request message for the first terminal device that is sent by the network device; and after step 102, the method may further include:
   sending, to the network device, a direct communication accept message for the second terminal device;
   or
before step 101, the method may further include:
   receiving a unicast connection establishment request message sent by the second terminal device, where the unicast connection establishment request message includes a direct communication request message; and
after step 102, the method may further include:
   sending a unicast connection establishment message to the second terminal device, where the unicast connection establishment message includes a direct communication accept message.

Optionally, the direct communication request message may include at least one of the following:
information about a requested QoS parameter, such as PC5 interface QoS parameter information;
a target terminal ID;
sidelink service information;
V2X service information, where the V2X service information may be used for a response by a terminal device having a unicast connection requirement, to perform the establishment of a unicast connection;
resource related information of the transmitting-end device;
physical cell ID (PCI) and frequency information of the transmitting-end device;
a physical cell ID (PCI) of the transmitting-end device;
a cell global ID (CGI) of the transmitting-end device, where with the aid of this CGI, it can be determined whether the corresponding terminals are served by the same network device;
user information of the target terminal;
IP address configuration information of the transmitting-end device; and
security related information of the transmitting-end device, where
the target terminal is at least one of the first terminal device and the second terminal device.

Optionally, the resource related information of the transmitting-end terminal may include at least one of the following:
information about a resource mode in which the transmitting-end device currently works, where with the aid of this information, it is convenient for receiving-end devices in different resource modes to quickly reject the establishment of a unicast connection;
information about a resource pool selected by the transmitting-end device, where this transmitting-end device is applicable to simultaneous work in a mode 1 and a mode 2; with the aid of this information, it is convenient for the receiving-end device to learn the information about the resource pool selected by the transmitting-end device; information about a resource use status of the transmitting-end device; and
information about a current RRC state of the target terminal.

Optionally, the direct communication accept message may include at least one of the following:
information about an accepted QoS parameter;
resource related information of the receiving-end device;
physical cell ID (PCI) and frequency information of the receiving-end device;
a physical cell ID (PCI) of the receiving-end device;
a cell global ID (CGI) of the receiving-end device;
a target terminal ID;
a link ID of the unicast connection;
user information of the target terminal; and
IP address configuration information of the receiving-end device, where
the target terminal is at least one of the first terminal device and the second terminal device.

It should be noted that for the content included in the QoS parameter information, the target terminal ID, the resource-related information of the transmitting-end device, etc. in the direct communication request message, reference may be made to the foregoing description, and details are not described herein again. For the content included in the QoS parameter information, the target terminal ID, the resource-related information of the receiving-end device, etc. in the direct communication accept message, reference may be made to the foregoing description, and details are not described herein again.

Referring to FIG 2, FIG 2 is another flowchart of a connection establishment method according to some embodiments of the present disclosure. The method is applied to a transmitting-end device, and as shown in FIG 2, the method includes the following steps:
Step 201: Send a unicast connection establishment request message to a receiving-end device.

The unicast connection establishment request message includes a direct communication request message, and the unicast connection establishment request message is used to request related information of a unicast connection between the transmitting-end device and the receiving-end device.

Step 202: Receive a unicast connection establishment message sent by the receiving-end device.

The unicast connection establishment message includes a direct communication accept message.

Step 203: Send a resource request message to a network device.

Step 204: Receive an RRC configuration message sent by the network device.

According to the connection establishment method of some embodiments of the present disclosure, the establishment of the unicast connection between the terminal devices and the configuration of resources for a corresponding terminal device can be implemented with the participation of the network device.

Optionally, after step 204, the method may further include:
sending, by the transmitting-end device, a unicast connection establishment complete message to the receiving-end device.

Optionally, the unicast connection establishment request message may include at least one of the following:
a transmitting-end device ID;
a link ID of the unicast connection;
resource related information of the transmitting-end device;
information about a requested QoS parameter;
capability information of the transmitting-end device;
physical cell ID and frequency information of the transmitting-end device;
a physical cell ID of the transmitting-end device;
a cell global ID of the transmitting-end device; and
a V2X unicast connection establishment request cause.

For the content included in the transmitting-end device ID, the resource related information of the transmitting-end device, the QoS parameter information, etc. in the unicast connection establishment request message, reference may be made to the foregoing description, and details are not described herein again.

Optionally, the unicast connection establishment message includes at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

For the content included in the radio bearer configuration information, the resource configuration information, the physical layer configuration information, the QoS parameter information, etc. in the unicast connection establishment message, reference may be made to the foregoing description, and details are not described herein again.

It should be noted that in this embodiment, for the content included in the resource request message, the RRC configuration message, the direct communication request message, and the direct communication accept message, reference may be made to the foregoing description, and details are not described herein again. In addition, when sending the RRC configuration message to the transmitting-end device, the network device may send the configuration information to the receiving-end device, or may not send the configuration information to the receiving-end device. For the specific implementation process, reference may be made to the foregoing embodiment of FIG. 1, and details are not described herein again.

Referring to FIG. 3, FIG. 3 is another flowchart of a connection establishment method according to some embodiments of the present disclosure. The method is applied to a network device, and as shown in FIG. 3, the method includes the following steps:
Step 301: Receive a first request message sent by a first terminal device, where the first request message is used to request, from a network device, related information of a unicast connection between the first terminal device and a second terminal device.

Step 302: Send a first response message to the first terminal device.

According to the connection establishment method of some embodiments of the present disclosure, the establishment of the unicast connection between the terminal devices and the configuration of resources for a corresponding terminal device can be implemented with the participation of the network device.

In some embodiments of the present disclosure, optionally, when the first request message is a resource request message, the resource request message includes at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal; and
a cell global ID of the target terminal;

Alternatively, the first request message is a unicast connection establishment request message, and the unicast connection establishment request message includes at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal;
a cell global ID of the target terminal; and
a V2X unicast connection establishment request cause, where
the target terminal is at least one of the first terminal device and the second terminal device.

Optionally, the resource related information of the target terminal includes at least one of the following:
information about a mode in which the target terminal currently works;
information about a resource pool selected by the target terminal;
information about a resource use status of the target terminal; and
information about a current RRC state of the target terminal.

Optionally, the first response message is an RRC configuration message or a unicast connection establishment message, and the first response message includes at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

Optionally, the resource configuration information includes at least one of the following:
information about a transmitting resource for feedback control information of a sidelink;
information about a transmitting resource for control signaling; and
information about a transmitting resource for service data.

Optionally, after step 301, the method further includes:
sending a first RRC message to the second terminal device, where
the first RRC message includes at least one of the following:
   resource configuration information of the second terminal device; and
   physical layer configuration information of the second terminal device; or
the first RRC message includes at least one of the following:
   radio bearer configuration information of a target terminal;
   resource configuration information of the second terminal device;
   physical layer configuration information of the second terminal device;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

Optionally, the target terminal ID includes at least one of the following:
an upper-layer ID, a layer 2 ID, a physical layer ID, an international mobile subscriber identity IMSI, a 5G-S-TMSI, a source ID, and a destination ID.

Optionally, the first response message is an RRC reject message or a unicast connection reject message,
and the first response message includes at least one of the following:
indication information indicating whether to reject QoS;
a connection reject cause; and
information about a wait time.

Optionally, when the first terminal device is a transmitting-end device, and the second terminal device is a receiving-end device, before step 301, the method may further include:
receiving a direct communication request message for the second terminal device that is sent by the first terminal device; and
sending a direct communication accept message for the first terminal device to the first terminal device; or
when the first request message is a unicast connection establishment request message and the first response message is a unicast connection establishment message, the unicast connection establishment request message includes a direct communication request message, and the unicast connection establishment message includes a direct communication accept message.

Optionally, when the first terminal device is a receiving-end device, and the second terminal device is a transmitting-end device, before step 301, the method may further include:
sending, to the first terminal device, a direct communication request message for the first terminal device;
and after step 302, the method further includes:
   receiving a direct communication accept message for the second terminal device that is sent by the first terminal device.

Optionally, the direct communication request message includes at least one of the following:
information about a requested QoS parameter;
a target terminal ID;
sidelink service information;
V2X service information;
resource related information of the transmitting-end device;
physical cell ID and frequency information of the transmitting-end device;
a physical cell ID of the transmitting-end device;
a cell global ID of the transmitting-end device;
user information of the target terminal;
IP address configuration information of the transmitting-end device; and
security related information of the transmitting-end device, where
the target terminal is at least one of the transmitting-end device and the receiving-end device.

Optionally, the direct communication accept message includes at least one of the following:
information about an accepted QoS parameter;
resource related information of the receiving-end device;
physical cell ID and frequency information of the receiving-end device;
a physical cell ID of the receiving-end device;
a cell global ID of the receiving-end device;
a target terminal ID;
a link ID of the unicast connection;
user information of the target terminal; and
IP address configuration information of the receiving-end device, where
the target terminal is at least one of the transmitting-end device and the receiving-end device.

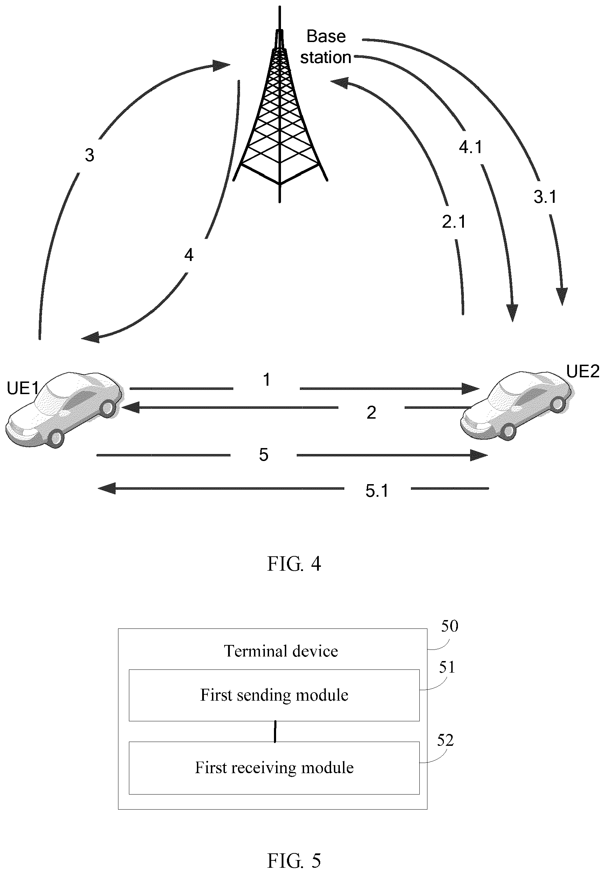

A unicast connection establishment process of the present disclosure is described below with reference to FIG 4 and specific embodiments.

In a specific embodiment of the present disclosure, as shown in FIG 4, for example, a network device is a base station, a transmitting-end device is UE 1, a receiving-end device is UE 2, the UE 1 and the UE 2 may be served by the same base station. In FIG 4, "1" means that the UE 1 sends a direct communication request message to the UE 2, "2" means that the UE 2 sends a direct communication response message to the UE 1, "5" means that the UE 1 sends a configuration message (including an RRC message) to the UE 2, and "5.1" means that the UE 2 sends a configuration message (including an RRC message) to the UE 1. Specific embodiments of the present disclosure are described below based on different unicast connection establishment processes:

### Embodiment 1

In Embodiment 1, a unicast connection and QoS negotiation are first established between the UE 1 and the UE 2 by means of the upper layer (upper layer), then the UE 1 and the UE 2 perform interaction of QoS and AS configuration information, etc. with a base station, and finally perform PC5 interaction of AS configuration information, etc. The unicast connection process in this embodiment mainly corresponds to "1 2 3 4 5" in FIG 4, and may include the following steps:
Step 11: The UE 1 sends a direct communication request message to the UE 2 (corresponding to "1" in FIG 4).

For the content included in the direct communication request message, reference may be made to the foregoing embodiment of FIG 1, and details are not described herein again.

Step 12: The UE 2 and the UE 1 perform authentication and security establishment processes.

Step 13: The UE 2 sends a direct communication accept message to the UE 1 (corresponding to "2" in FIG. 4).

For the content included in the direct communication accept message, reference may be made to the foregoing embodiment of FIG. 1, and details are not described herein again.

Step 14.1: When there is no AS unicast connection establishment process, the UE 1 sends a resource request message to the base station.

For the content included in the resource request message, reference may be made to the foregoing embodiment of FIG. 1, and details are not described herein again.

Step 14.2: When there is an AS unicast connection establishment process, the UE 1 sends a unicast connection establishment request message to the base station.

For the content included in the unicast connection establishment request message, reference may be made to the foregoing embodiment of FIG 1, and details are not described herein again.

Either of step 14.1 and step 14.2 is performed.

Step 15: The base station sends an RRC configuration message (corresponding to step 14.1) or a unicast connection establishment message (corresponding to step 14.2) to the UE 1.

For the content included in the RRC configuration message and the unicast connection establishment message, reference may be made to the foregoing embodiment of FIG. 1, and details are not described herein again.

Step 16: The UE 1 sends an RRC message to the UE 2.

In this embodiment, the base station does not send configuration information to the UE 2, and for the content included in the RRC message in step 16, reference may be made to the description of the second RRC message in the foregoing embodiment of FIG. 1, and details are not described herein again.

Step 17: Optionally, the UE 1 sends an RRC confirm message or a unicast connection complete message to the base station.

Step 16 and step 17 can be performed in any order, or can occur simultaneously.

Step 18: Optionally, the UE 2 sends an RRC confirm message to the UE 1.

### Embodiment 1-0

Embodiment 1-0 is the same as Embodiment 1, except that the base station rejects a PC5 unicast connection between the UE 1 and the UE 2 midway, where the process of rejecting the connection may include the following steps:

Step 21 to step 24.2: Same as step 11 to step 14.2 respectively in Embodiment 1.

Step 25: The base station sends an RRC reject message or a unicast connection reject message to the UE 1.

For the content included in the RRC reject message and the unicast connection reject message, reference may be made to the foregoing embodiment of FIG. 1, and details are not described herein again.

Step 26: The UE 1 sends an upper-layer connection release message or a unicast connection establishment failure message to the UE 2.

### Embodiment 1-1

In Embodiment 1-1, a unicast connection and QoS negotiation are first established between the UE 1 and the UE 2 by means of the upper layer, then the UE 1 and the UE 2 perform interaction of QoS and AS configuration information, etc. with the base station, and finally the AS configuration information and the like are sent by the base station to the UE 1 and the UE 2, where only the configuration information sent to the UE 1 has common bearer configuration information, and the UE 1 further needs to send it to the UE 2. The unicast connection process in this embodiment mainly corresponds to " 1 2 3 4 and 4.1 5" in FIG 4, and may include the following steps:

Step 31 to step 34.2: Same as step 11 to step 14.2 respectively in Embodiment 1.

Step 35: The base station sends an RRC configuration message (corresponding to step 54.1) or a unicast connection establishment message (corresponding to step 14.2) to the UE 1.

For the content included in the RRC configuration message and the unicast connection establishment message, reference may be made to the foregoing embodiment of FIG 1, and details are not described herein again.

Step 36: The base station sends an RRC message to the UE 2.

The RRC message in this step 56 is the same as the first RRC message (part of the configuration information) in the foregoing embodiment of FIG 1. Details are not described herein again.

Step 37: The UE 1 sends an RRC message to the UE 2.

In this embodiment, the base station sends the configuration message to the UE 1 and the UE 2, and for the content included in the RRC message in step 57, reference may be made to the description of the third RRC message in the foregoing embodiment of FIG. 1, and details are not described herein again.

Step 38: Optionally, the UE 1 sends an RRC confirm message or a unicast connection complete message to the base station.

Step 57 and step 58 can be performed in any order, or can occur simultaneously.

Step 39: Optionally, the UE 2 sends an RRC confirm message to the UE 1.

### Embodiment 1-2

In Embodiment 1-2, a unicast connection and QoS negotiation are first established between the UE 1 and the UE 2 by means of the upper layer, then the UE 1 and the UE 2 perform interaction of QoS and AS configuration information, etc. with the base station, and finally the AS configuration information and the like are sent by the base station to the UE 1 and the UE 2, where the UE 1 and the UE 2 receive the same configuration information. The unicast connection process in this embodiment mainly corresponds to "1 2 3 4 and 4.1" in FIG 4, and may include the following steps:

Step 41 to step 44.2: Same as step 11 to step 14.2 respectively in Embodiment 1.

Step 45: The base station sends an RRC configuration message (corresponding to step 64.1) or a unicast connection establishment message (corresponding to step 64.2) to the UE 1.

For the content included in the RRC configuration message and the unicast connection establishment message, reference may be made to the foregoing embodiment of FIG 1, and details are not described herein again.

Step 46: The base station sends an RRC message to the UE 2.

In this embodiment, the base station sends a configuration message to the UE 1 and the UE 2, the UE 1 and the UE 2 receive the same configuration information, and the UE 1 does not need to send the configuration information to the UE 2.

Step 47: Optionally, the UE 1 sends an RRC confirm message or a unicast connection complete message to the base station.

Step 48: Optionally, the UE 2 sends an RRC confirm message to the base station.

Step 47 needs to be after step 45, and step 48 needs to be after step 46. Step 45 and step 46 can be performed in any order, or can occur simultaneously.

### Embodiment 2

In Embodiment 2, in the process of establishing a unicast connection and QoS negotiation by means of the upper layer, the UE 1 and the UE 2 complete interaction of QoS and AS configuration information with the base station, and complete PC5 interaction of AS configuration information, etc. The unicast connection process in this embodiment mainly corresponds to "1 2.1 3.1 2 and 5.1" in FIG. 4, and may include the following steps:

Step 51 and step 52: Same as step 11 and step 12 respectively in Embodiment 1.

Step 53.1: When there is no AS unicast connection establishment process, the UE 2 sends a resource request message to the base station.

For the content included in the resource request message, reference may be made to the foregoing embodiment of FIG. 1, and details are not described herein again.

Step 53.2: When there is an AS unicast connection establishment process, the UE 2 sends a unicast connection establishment request message to the base station.

For the content included in the unicast connection establishment request message, reference may be made to the foregoing embodiment of FIG. 1, and details are not described herein again.

Either of step 53.1 and step 53.2 is performed.

Step 54: The base station sends an RRC configuration message (corresponding to step 53.1) or a unicast connection establishment message (corresponding to step 53.2) to the UE 2.

For the content included in the RRC configuration message and the unicast connection establishment message, reference may be made to the foregoing embodiment of FIG. 1, and details are not described herein again.

Step 55: The UE 2 sends an RRC message to the UE 1.

In this embodiment, the base station does not send an RRC message to the UE 1, and for the content included in the RRC message in step 55, reference may be made to the description of the second RRC message in the foregoing embodiment of FIG. 1, and details are not described herein again.

Step 56: The UE 2 sends a direct communication accept message to the UE 1.

The direct communication accept message may include at least one of the following: information about an accepted PC5 QoS parameter, user information (User info), and an IP address configuration of the UE 2.

Step 57: Optionally, the UE 2 sends an RRC confirm message or a V2X connection complete message to the base station.

Step 55, step 56, and step 57 can be performed in any order, or can occur simultaneously. The RRC message sent in step 55 and the direct communication accept message sent in step 56 may be sent by two pieces of signaling, or may be packaged and sent in one piece of signaling.

Step 58: Optionally, the UE 1 sends an RRC confirm message to the UE 2.

### Embodiment 2-0

Embodiment 2-0 is the same as Embodiment 2, except that the base station rejects a PC5 unicast connection between the UE 1 and the UE 2 midway, where the process of rejecting the connection may include the following steps:

Step 61 to step 63.2: Same as step 51 to step 53.2 respectively in Embodiment 2.

Step 64: The base station sends an RRC reject message or a unicast connection reject message to the UE 2.

For the content included in the RRC reject message and the unicast connection reject message, reference may be made to the foregoing embodiment of FIG. 1, and details are not described herein again.

Step 65: Optionally, the UE 2 sends a direct communication reject message to the UE 1.

### Embodiment 2-1

In Embodiment 2-1, in the process of establishing a unicast connection and QoS negotiation by means of the upper layer, the UE 1 and the UE 2 complete interaction of QoS and AS configuration information with the base station, and subsequently the AS configuration information and the like are sent by the base station to the UE 1 and the UE 2. The UE 1 and the UE 2 receive the same configuration information, and RRC configuration information interaction between the UEs is not required. The unicast connection process in this embodiment mainly corresponds to "1 2.1 3.1 4 2" in FIG. 4, and may include the following steps:

Step 71 to step 73.2: Same as step 51 to step 53.2 respectively in Embodiment 2.

Step 74: The base station sends an RRC configuration message (corresponding to step 73.1) or a unicast connection establishment message (corresponding to step 73.2) to the UE 2.

For the content included in the RRC configuration message and the unicast connection establishment message, reference may be made to the foregoing embodiment of FIG. 1, and details are not described herein again.

Step 75: The base station sends an RRC message to the UE 1.

In this embodiment, the base station sends a configuration message to the UE 1 and the UE 2, the UE 1 and the UE 2 receive the same configuration information, and the UE 2 does not need to send the configuration information to the UE 1.

Step 76: The UE 2 sends a direct communication accept message to the UE 1.

The direct communication accept message may include at least one of the following: information about an accepted PC5 QoS parameter, user information (User info), and an IP address configuration of the UE 2.

Step 77: Optionally, the UE 2 sends an RRC confirm message or a V2X connection complete message to the base station.

Step 78: Optionally, the UE 1 sends an RRC confirm message to the base station.

### Embodiment 2-2

In Embodiment 2-2, in the process of establishing a unicast connection and QoS negotiation by means of the upper layer, the UE 1 and the UE 2 complete interaction of QoS and AS configuration information with the base station, and subsequently the AS configuration information and the like are sent by the base station to the UE 1 and the UE 2. Only the configuration information sent to the UE 1 has common bearer configuration information, and the UE 1 further needs to send it to the UE 2. The unicast connection process in this embodiment mainly corresponds to "1 2.1 3.1 and 4 2 and 5.1" in FIG 4, and may include the following steps:

Step 81 to step 83.2: Same as step 51 to step 53.2 respectively in Embodiment 2.

Step 84: The base station sends an RRC configuration message (corresponding to step 73.1) or a unicast connection establishment message (corresponding to step 73.2) to the UE 2.

The RRC configuration message or the unicast connection establishment message may include at least one of the following:
radio bearer configuration information of the UE 1 and the UE 2;
resource configuration information of the UE 2;
physical layer configuration information of the UE 2;
indication information indicating whether to accept QoS;
information about an accepted QoS parameter;
a link ID corresponding to the radio bearer configuration information; and
a group of UE 1 IDs and UE 2 IDs corresponding to the radio bearer configuration information.

Step 85: The base station sends an RRC message to the UE 1, where the RRC message may include at least one of the following: resource configuration information of the UE 1 and physical layer configuration information of the UE 1.

Step 86: The UE 2 sends an RRC message to the UE 1, where the RRC message may include at least one of the following: radio bearer configuration information of the UE 1 and/or the UE 2, a link ID corresponding to the radio bearer configuration information, and a group of UE 1 IDs and UE 2 IDs corresponding to the radio bearer configuration information.

Step 87: Optionally, the UE 2 sends an RRC confirm message or a unicast connection complete message to the base station.

Step 88: Optionally, the UE 1 sends an RRC confirm message to the base station.

Step 89: Optionally, the UE 1 sends an RRC confirm message to the UE 2.

Step 87 is after step 84, step 88 is after step 85, and step 89 is after step 86. Step 84 and step 85 can be performed in any order, or can occur simultaneously. Step 86 and step 87 can be performed in any order, or can occur simultaneously.

### Embodiment 3

In Embodiment 3, a unicast connection and QoS negotiation process is established between the UE 1 and the UE 2 by means of the upper layer, and is completed by the base station. The unicast connection process in this embodiment mainly corresponds to "3 3.1 2.1 4 5" in FIG 4, and may include the following steps:

Step 91: The UE 1 sends, to the base station, a direct communication request message for the UE 2.

For the content included in the direct communication request message, reference may be made to the foregoing embodiment of FIG. 1, and details are not described herein again.

Step 92: The base station sends, to the UE 2, the direct communication request message of the UE 1 for the UE 2.

Step 93: The UE 1 and the UE 2 perform authentication and security establishment processes.

Step 94.1: The UE 2 sends a resource request message to the base station.

For the content included in the resource request message, reference may be made to the foregoing embodiment of FIG 1, and details are not described herein again.

Step 94.2: The UE 2 sends a unicast connection establishment request message to the base station.

For the content included in the unicast connection establishment request message, reference may be made to the foregoing embodiment of FIG. 1, and details are not described herein again.

Either of step 94.1 and step 94.2 is performed.

Step 95: The base station sends an RRC configuration message (corresponding to step 94.1) or a unicast connection establishment message (corresponding to step 94.2) to the UE 2.

For the content included in the RRC configuration message and the unicast connection establishment message, reference may be made to the foregoing embodiment of FIG 1, and details are not described herein again.

Step 96: The UE 2 returns, to the base station, a direct communication accept message for the UE 1.

For the content included in the direct communication accept message, reference may be made to the foregoing embodiment of FIG 1, and details are not described herein again.

Step 97: The UE 2 sends an RRC message to the UE 1.

In this embodiment, the base station does not send a configuration message to the UE 1, and for the content included in the RRC message in step 47, reference may be made to the description of the second RRC message in the foregoing embodiment of FIG 1, and details are not described herein again.

Step 98: The base station sends a direct communication accept message to the UE 1.

The direct communication accept message may include at least one of the following: information about an accepted PC5 QoS parameter, user information (User info), and an IP address configuration of the UE 2.

Step 96 and step 97 can be performed in any order, or can occur simultaneously. However, step 97 needs to be after step 95.

### Embodiment 3-0

Embodiment 3-0 is the same as Embodiment 3, except that the base station rejects a PC5 unicast connection between the UE 1 and the UE 2 midway, where the process of rejecting the connection may include the following steps:

Step 01 to step 03: Same as step 91 to step 93 respectively in Embodiment 3.

Step 04: The UE 2 returns, to the base station, a direct communication reject message for the UE 1.

The direct communication reject message may include at least one of the following: indication information indicating whether to reject QoS; a connection reject cause; and information about a wait time.

Step 05: The base station returns a direct communication reject message to the UE 1.

### Embodiment 3-1

In Embodiment 3-1, a unicast connection and QoS negotiation process is established between the UE 1 and the UE 2 by means of the upper layer, and is completed by the base station; and AS configuration information and the like of the base station are sent by the base station to the UE 1 and the UE 2, where the UE 1 and the UE 2 receive the same configuration information. The unicast connection process in this embodiment mainly corresponds to "3 3.1 2.1 4 and 4.1" in FIG. 4, and may include the following steps:

Step 111 to step 114.2: Same as step 91 to step 94.2 respectively in Embodiment 3.

Step 115: The base station sends an RRC configuration message (corresponding to step 114.1) or a unicast connection establishment message (corresponding to step 114.2) to the UE 2.

For the content included in the RRC configuration message and the unicast connection establishment message, reference may be made to the foregoing embodiment of FIG 1, and details are not described herein again.

Step 116: The UE 2 returns, to the base station, a direct communication accept message for the UE 1.

For the content included in the direct communication accept message, reference may be made to the foregoing embodiment of FIG. 1, and details are not described herein again.

Step 117: The base station sends an RRC message to the UE 1.

In this embodiment, the base station sends a configuration message to the UE 1 and the UE 2, the UE 1 and the UE 2 receive the same configuration information, and the UE 2 does not need to send the configuration information to the UE 1.

Step 118: The base station sends a direct communication accept message to the UE 1.

The direct communication accept message may include at least one of the following: information about an accepted PC5 QoS parameter, user information (User info), and an IP address configuration of the UE 2.

Step 115 and step 117 can be performed in any order, or can occur simultaneously. However, step 116 needs to be after step 115.

### Embodiment 3-2

In Embodiment 3-2, a unicast connection and QoS negotiation process is established between the UE 1 and the UE 2 by means of the upper layer, and is completed by the base station. The AS configuration information and the like of the base station are sent by the base station to the UE 1 and the UE 2, where only the configuration information sent to the UE 2 has common bearer configuration information, and the UE 2 further needs to send it to the UE 1. The unicast connection process in this embodiment mainly corresponds to "3 3.1 2.1 4 and 4.1 5" in FIG. 4, and may include the following steps:

Step 121 to step 124.2: Same as step 91 to step 94.2 respectively in Embodiment 3.

Step 125: The base station sends an RRC configuration message (corresponding to step 124.1) or a unicast connection establishment message (corresponding to step 124.2) to the UE 2.

For the content included in the RRC configuration message and the unicast connection establishment message, reference may be made to the foregoing embodiment of FIG. 1, and details are not described herein again.

Step 126: The UE 2 returns, to the base station, a direct communication accept message for the UE 1.

For the content included in the direct communication accept message, reference may be made to the foregoing embodiment of FIG. 1, and details are not described herein again.

Step 127: The base station sends an RRC message to the UE 1.

For the content included in the RRC message in step 127, reference may be made to the first RRC message in the foregoing embodiment of FIG. 1, and details are not described herein again.

Step 128: The UE 2 sends an RRC message to the UE 1.

For the content included in the RRC message in step 128, reference may be made to the third RRC message in the foregoing embodiment of FIG. 1, and details are not described herein again.

Step 129: The base station sends a direct communication accept message to the UE 1.

The direct communication accept message may include at least one of the following: information about an accepted PC5 QoS parameter, user information (User info), and an IP address configuration of the UE 2.

Step 125 and step 127 can be performed in any order, or can occur simultaneously. However, step 128 needs to be after step 125.

### Embodiment 4

In Embodiment 4, corresponding to the establishment of an AS unicast connection, the UE 1 may directly initiate a unicast connection establishment request to the base station. The unicast connection process in this embodiment may include the following steps:

Step 131: The UE 1 sends a unicast connection establishment request message (such as an RRC message) to the base station, where the unicast connection establishment request message includes a direct communication request message.

Step 132: The base station forwards the direct communication request message to the UE 2.

Alternatively, in this step 132, the base station knows various information about the UE 2, and directly negotiates with the UE 1 in the place of the UE 2, and proceeds directly to step 134.

Step 133: The UE 2 returns a direct communication accept message to the base station.

Step 134: The base station sends a unicast connection establishment message and corresponding configuration information to the UE 1, where the unicast connection establishment message includes the direct communication accept message.

Step 135: The UE 1 sends configuration information related to the UE 2 and bearer configuration information to the UE 2.

Step 136: Optionally, the UE 2 returns a confirm message to the UE 1.

Step 137: Optionally, after step 134, the UE 1 sends a unicast connection establishment complete message to the base station.

### Embodiment 5

In Embodiment 5, a unicast connection establishment request may be initiated between the UE 1 and the UE 2. The unicast connection process in this embodiment may include the following steps:

Step 141: The UE 1 sends a unicast connection establishment request message to the UE 2.

The unicast connection establishment request message may include a direct communication request message (which is equivalent to that the direct communication request message serves as a container in an RRC message of the unicast connection establishment request, where the content included in the direct communication request message may be as described in Embodiment 1, and details are not described herein again) and at least one of the following:
a UE 1 ID;
a link ID of the unicast connection;
resource related information of the UE 1;
information about a requested PC5 QoS parameter;
capability information of the UE 1;
physical cell ID and frequency information, or a physical cell ID (PCI), or a cell global ID (CGI) of the UE 1; and
a V2X unicast connection establishment request cause (cause).

Step 142: The UE 2 sends a unicast connection establishment message to the UE 1.

The unicast connection establishment message may include a direct communication accept message and at least one of the following:
radio bearer configuration information of the UE 1 and the UE 2;
resource configuration information of the UE 1/the UE 2;
physical layer configuration information of the UE 1/the UE 2;
indication information indicating whether to accept QoS;
information about an accepted QoS parameter;
a link ID corresponding to the radio bearer configuration information; and
a group of UE 1 IDs and UE 2 IDs corresponding to the radio bearer configuration information.

Step 143: The UE 1 sends a resource request message to the base station.

For the content included in the resource request message, reference may be made to the foregoing embodiment of FIG. 1, and details are not described herein again.

Step 144: The base station sends an RRC configuration message to the UE 1.

For the content included in the RRC configuration message, reference may be made to the foregoing embodiment of FIG. 1, and details are not described herein again.

Step 145: The UE 1 sends an RRC message to the UE 2.

In this embodiment, the base station does not send configuration information to the UE 2, and for the content included in the RRC message in step 145, reference may be made to the description of the second RRC message in the foregoing embodiment of FIG. 1, and details are not described herein again.

It should be noted that, in this embodiment, the base station does not send the configuration information to the UE 2; alternatively, the base station may send configuration information to each of theUE 1 and the UE 2, and reference may be made to the descriptions in Embodiments 1-1 and 1-2, which are not described herein again.

Step 146: Optionally, the UE 1 sends an RRC confirm message or a unicast connection complete message to the base station.

Step 145 and step 146 can be performed in any order, or can occur simultaneously.

Step 147: Optionally, the UE 2 sends an RRC confirm message to the UE 1.

The connection establishment method in the present disclosure is described in the foregoing embodiments. A terminal device and a network device in the present disclosure are described below with reference to embodiments and accompanying drawings.

Referring to FIG. 5, FIG. 5 is a schematic structural diagram of a terminal device according to some embodiments of the present disclosure. The terminal device is specifically a first terminal device. As shown in FIG. 5, the terminal device 50 includes:
a first sending module 51 configured to send a first request message to a network device, where the first request message is used to request, from a network device, information related to a unicast connection between the first terminal device and a second terminal device; and
a first receiving module 52 configured to receive a first response message sent by the network device.

In some embodiments of the present disclosure, the establishment of the unicast connection between the terminal devices (for example, the establishment of a sidelink unicast connection) and the configuration of resources for a corresponding terminal device can be implemented with the participation of the network device.

Optionally, the first request message is a resource request message, and the resource request message includes at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal; and
a cell global ID of the target terminal.

Alternatively, the first request message is a unicast connection establishment request message, and the unicast connection establishment request message includes at least one of the following:
a target terminal ID;
a link ID of the unicast connection;
resource related information of a target terminal;
quality of service QoS parameter information negotiated between the first terminal device and the second terminal device;
capability information of the target terminal;
physical cell ID and frequency information of the target terminal;
a physical cell ID of the target terminal;
a cell global ID of the target terminal; and
a V2X unicast connection establishment request cause, where
the target terminal is at least one of the first terminal device and the second terminal device.

Optionally, the resource related information of the target terminal includes at least one of the following:
information about a resource mode in which the target terminal currently works;
information about a resource pool selected by the target terminal;
information about a resource use status of the target terminal; and
information about a current radio resource control state of the target terminal.

Optionally, the first response message is an RRC configuration message or a unicast connection establishment message.

The first response message includes at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

Optionally, the resource configuration information includes at least one of the following:
information about a transmitting resource for feedback control information of a sidelink;
information about a transmitting resource for control signaling; and
information about a transmitting resource for service data.

Optionally, when the network device does not send configuration information to the second terminal device, the first sending module 51 is further configured to:
send a second RRC message to the second terminal device, where
the second RRC message includes at least one of the following:
   radio bearer configuration information of a target terminal;
   resource configuration information of the second terminal device;
   physical layer configuration information of the second terminal device;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

Optionally, when the network device sends a first RRC message to the second terminal device, the first sending module 51 is further configured to:
send a third RRC message to the second terminal device, where
the first RRC message includes at least one of the following:
   resource configuration information of the second terminal device; and
   physical layer configuration information of the second terminal device; and
the third RRC message includes at least one of the following:
   radio bearer configuration information of a target terminal;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

Optionally, the target terminal ID includes at least one of the following:
an upper-layer ID, a layer 2 ID, a physical layer ID, an international mobile subscriber identity IMSI, a 5G-S-TMSI, a source Source ID, and a destination Destination ID.

Optionally, the first response message is an RRC reject message or a unicast connection reject message; and
the first response message includes at least one of the following:
indication information indicating whether to reject QoS;
a connection reject cause; and
information about a wait time.

Optionally, the first sending module 51 is further configured to:
send an upper-layer connection release message or a unicast connection establishment failure message to the second terminal device.

Optionally, the first terminal device is a transmitting-end device, and the second terminal device is a receiving-end device; the first sending module 51 is further configured to: send a direct communication request message to the second terminal device; and
the first receiving module 52 is further configured to: receive a direct communication accept message sent by the second terminal device;
   or
the first sending module 51 is further configured to: send, to the network device, a direct communication request message for the second terminal device; and
the first receiving module 52 is further configured to: receive a direct communication accept message for the first terminal device that is sent by the network device;
   or
when the first request message is a unicast connection establishment request message and the first response message is a unicast connection establishment message, the unicast connection establishment request message includes a direct communication request message, and the unicast connection establishment message includes a direct communication accept message.

Optionally, the first terminal device is a receiving-end device, and the second terminal device is a transmitting-end device; the first receiving module 52 is further configured to: receive a direct communication request message sent by the second terminal device; and
the first sending module 51 is further configured to: send a direct communication accept message to the second terminal device;
   or
the first receiving module 52 is configured to: receive a direct communication request message for the first terminal device that is sent by the network device; and
the first sending module 51 is configured to: send, to the network device, a direct communication accept message for the second terminal device;
   or
the first receiving module 52 is further configured to: receive a unicast connection establishment request message sent by the second terminal device, where the unicast connection establishment request message includes a direct communication request message; and
the first sending module 51 is further configured to: send a unicast connection establishment message to the second terminal device, where the unicast connection establishment message includes a direct communication accept message.

Optionally, the direct communication request message includes at least one of the following:
information about a requested QoS parameter;
a target terminal ID;
sidelink service information;
V2X service information;
resource related information of the transmitting-end device;
physical cell ID and frequency information of the transmitting-end device;
a physical cell ID of the transmitting-end device;
a cell global ID of the transmitting-end device;
user information of the target terminal;
IP address configuration information of the transmitting-end device; and
security related information of the transmitting-end device, where
the target terminal is at least one of the first terminal device and the second terminal device.

Optionally, the direct communication accept message includes at least one of the following:
information about an accepted QoS parameter;
resource related information of the receiving-end device;
physical cell ID and frequency information of the receiving-end device;
a physical cell ID of the receiving-end device;
a cell global ID of the receiving-end device;
a target terminal ID;
a link ID of the unicast connection;
user information of the target terminal; and
IP address configuration information of the receiving-end device, where
the target terminal is at least one of the first terminal device and the second terminal device.

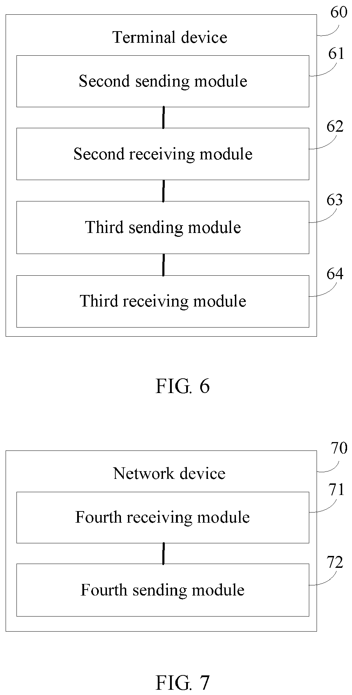

Referring to FIG. 6, FIG. 6 is a schematic structural diagram of a terminal device according to some embodiments of the present disclosure. The terminal device is specifically a transmitting-end device. As shown in FIG. 6, the terminal device 60 includes:
a second sending module 61 configured to send a unicast connection establishment request message to a receiving-end device, where the unicast connection establishment request message includes a direct communication request message, and the unicast connection establishment request message is used to request related information of a unicast connection between the transmitting-end device and the receiving-end device;
a second receiving module 62 configured to receive a unicast connection establishment message sent by the receiving-end device, where the unicast connection establishment message includes a direct communication accept message;
a third sending module 63 configured to send a resource request message to a network device; and
a third receiving module 64 configured to receive an RRC configuration message sent by the network device.

In some embodiments of the present disclosure, the establishment of the unicast connection between the terminal devices (for example, the establishment of a sidelink unicast connection) and the configuration of resources for a corresponding terminal device can be implemented with the participation of the network device.

Optionally, the second sending module 61 is further configured to send a unicast connection establishment complete message to the receiving-end device.

Optionally, the unicast connection establishment request message includes at least one of the following:
a transmitting-end device ID;
a link ID of the unicast connection;
resource related information of the transmitting-end device;
information about a requested QoS parameter;
capability information of the transmitting-end device;
physical cell ID and frequency information of the transmitting-end device;
a physical cell ID of the transmitting-end device;
a cell global ID of the transmitting-end device; and
a V2X unicast connection establishment request cause.

Optionally, the unicast connection establishment message includes at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

Referring to FIG. 7, FIG. 7 is a schematic structural diagram of a network device according to some embodiments of the present disclosure. As shown in FIG. 7, the network device 70 includes:
a fourth receiving module 71 configured to receive a first request message sent by a first terminal device, where the first request message is used to request, from the network device, related information of a unicast connection between the first terminal device and a second terminal device; and
a fourth sending module 72 configured to send a first response message to the first terminal device.

In some embodiments of the present disclosure, the establishment of the unicast connection between the terminal devices (for example, the establishment of a sidelink unicast connection) and the configuration of resources for a corresponding terminal device can be implemented with the participation of the network device.

Optionally, the first request message is a resource request message, and the resource request message includes at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal; and
a cell global ID of the target terminal.

Alternatively, the first request message is a unicast connection establishment request message, and the unicast connection establishment request message includes at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal;
a cell global ID of the target terminal; and
a V2X unicast connection establishment request cause, where
the target terminal is at least one of the first terminal device and the second terminal device.

Optionally, the resource related information of the target terminal includes at least one of the following:
information about a mode in which the target terminal currently works;
information about a resource pool selected by the target terminal;
information about a resource use status of the target terminal; and
information about a current RRC state of the target terminal.

Optionally, the first response message is an RRC configuration message or a unicast connection establishment message,
and the first response message includes at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, where
the target terminal is at least one of the first terminal device and the second terminal device.

Optionally, the resource configuration information includes at least one of the following:
information about a transmitting resource for feedback control information of a sidelink;
information about a transmitting resource for control signaling; and
information about a transmitting resource for service data.

Optionally, the fourth sending module 72 is configured to
send a first RRC message to the second terminal device, where
the first RRC message includes at least one of the following:
   resource configuration information of the second terminal device; and
   physical layer configuration information of the second terminal device; or
the first RRC message includes at least one of the following:
   radio bearer configuration information of a target terminal;
   resource configuration information of the second terminal device;
   physical layer configuration information of the second terminal device;
   a link ID corresponding to the radio bearer configuration information; and
   a group of first terminal device IDs and second terminal device IDs corresponding to the radio bearer configuration information, where
   the target terminal is at least one of the first terminal device and the second terminal device.

Optionally, the target terminal ID includes at least one of the following:
an upper-layer ID, a layer 2 ID, a physical layer ID, an international mobile subscriber identity IMSI, a 5G-S-TMSI, a source ID, and a destination ID.

Optionally, the first response message is an RRC reject message or a unicast connection reject message; and
the first response message includes at least one of the following:
indication information indicating whether to reject QoS;
a connection reject cause; and
information about a wait time.

Optionally, the first terminal device is a transmitting-end device, and the second terminal device is a receiving-end device; the fourth receiving module 71 is further configured to: receive a direct communication request message for the second terminal device that is sent by the first terminal device;
the fourth sending module 72 is further configured to: send a direct communication accept message for the first terminal device to the first terminal device;
   or
when the first request message is a unicast connection establishment request message and the first response message is a unicast connection establishment message, the unicast connection establishment request message includes a direct communication request message, and the unicast connection establishment message includes a direct communication accept message.

Optionally, the first terminal device is a receiving-end device, and the second terminal device is a transmitting-end device; the fourth receiving module 72 is further configured to: send a direct communication request message for the first terminal device to the first terminal device; and
the fourth receiving module 71 is further configured to receive a direct communication accept message for the second terminal device that is sent by the first terminal device.

Optionally, the direct communication request message includes at least one of the following:
information about a requested QoS parameter;
a target terminal ID;
sidelink service information;
V2X service information;
resource related information of the transmitting-end device;
physical cell ID and frequency information of the transmitting-end device;
a physical cell ID of the transmitting-end device;
a cell global ID of the transmitting-end device;
user information of the target terminal;
IP address configuration information of the transmitting-end device; and
security related information of the transmitting-end device, where
the target terminal is at least one of the transmitting-end device and the receiving-end device.

Optionally, the direct communication accept message includes at least one of the following:
information about an accepted QoS parameter;
resource related information of the receiving-end device;
physical cell ID and frequency information of the receiving-end device;
a physical cell ID of the receiving-end device;
a cell global ID of the receiving-end device;
a target terminal ID;
a link ID of the unicast connection;
user information of the target terminal;
IP address configuration information of the receiving-end device, where
the target terminal is at least one of the transmitting-end device and the receiving-end device.

Some embodiments of the present disclosure further provide a terminal device, including a processor, a memory, and a computer program stored on the memory and executable by the processor. When the computer program is executed by the processor, the processes of the foregoing embodiment of the connection establishment method applied to a first terminal device or the processes of the foregoing embodiment of the connection establishment method applied to a transmitting-end device are implemented, and the same technical effects can be achieved. To avoid repetition, details are not described herein again.

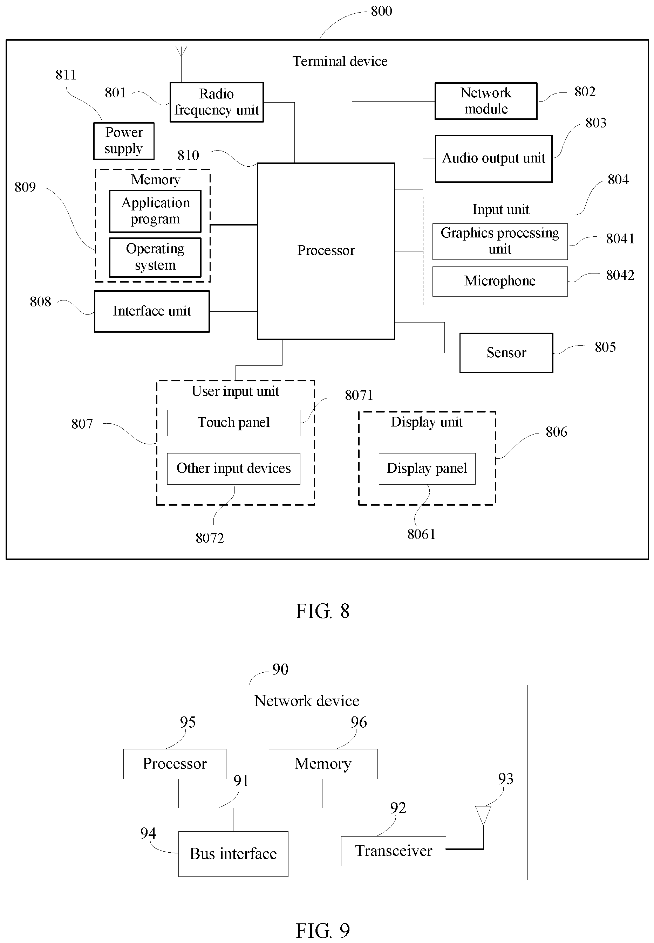

Specifically, FIG. 8 is a schematic structural diagram of a hardware structure of a terminal device that implements various embodiments of the present disclosure. The terminal device 800 includes but is not limited to the following components: a radio frequency unit 801, a network module 802, an audio output unit 803, an input unit 804, a sensor 805, a display unit 806, a user input unit 807, an interface unit 808, a memory 809, a processor 810, and a power supply 811. Persons skilled in the art may understand that the terminal structure shown in FIG 8 does not constitute a limitation to the terminal. The terminal may include more or fewer components than those shown in the figure, or some components may be combined, or there may be a different component arrangement. In some embodiments of the present disclosure, the terminal includes but is not limited to a mobile phone, a tablet computer, a notebook computer, a palmtop computer, an in-vehicle terminal, a wearable device, a pedometer, and the like.

The terminal device 800 may be a first terminal device. The radio frequency unit 801 is configured to receive a first request message to a network device, where the first request message is used to request, from the network device, related information of a unicast connection between the first terminal device and a second terminal device; and receive a first response message sent by the network device.

Alternatively, the terminal device 800 may be a transmitting-end device. The radio frequency unit 801 is configured to send a unicast connection establishment request message to a receiving-end device, where the unicast connection establishment request message includes a direct communication request message, and the unicast connection establishment request message is used to request related information of a unicast connection between the transmitting-end device and the receiving-end device; receive a unicast connection establishment message sent by the receiving-end device, where the unicast connection establishment message includes a direct communication accept message; send a resource request message to a network device; and receive an RRC configuration message sent by the network device.

In some embodiments of the present disclosure, the establishment of the unicast connection between the terminal devices (for example, the establishment of a sidelink unicast connection) and the configuration of resources for a corresponding terminal device can be implemented with the participation of the network device.

It should be understood that in this embodiment of the present disclosure, the radio frequency unit 801 may be configured to receive and send information, or receive and send signals during a call. Specifically, the radio frequency unit 801 receives downlink data from a base station, and transmits the downlink data to the processor 810 for processing; and in addition, transmits uplink data to the base station. Generally, the radio frequency unit 801 includes but is not limited to an antenna, at least one amplifier, a transceiver, a coupler, a low noise amplifier, a duplexer, and the like. In addition, the radio frequency unit 801 may further communicate with another device through a wireless communications system and network.

The terminal provides a user with wireless broadband Internet access through the network module 802, for example, helps the user send and receive emails, browse web pages, and access streaming media.

The audio output unit 803 may convert audio data received by the radio frequency unit 801 or the network module 802 or stored in the memory 809 into an audio signal, and output the audio signal into sound. In addition, the audio output unit 803 may further provide audio output related to a specific function performed by the terminal 800 (for example, call signal receiving sound or message receiving sound). The audio output unit 803 includes a speaker, a buzzer, a receiver, and the like.

The input unit 804 is configured to receive an audio signal or a video signal. The input unit 804 may include a graphics processing unit (Graphics Processing Unit, GPU) 8041 and a microphone 8042. The graphics processing unit 8041 is configured to process image data of a still picture or a video obtained by an image capture apparatus (for example, a camera) in video capture mode or image capture mode. A processed image frame may be displayed on the display unit 806. The image frame processed by the graphics processing unit 8041 may be stored in the memory 809 (or another storage medium) or sent via the radio frequency unit 801 or the network module 802. The microphone 8042 may receive sound and can process such sound into audio data. Processed audio data may be converted, in telephone call mode, into a format that may be sent to a mobile communication base station via the radio frequency unit 801 for output.

The terminal device 800 further includes at least one sensor 805, such as a light sensor, a motion sensor, and other sensors. Specifically, the light sensor includes an ambient light sensor and a proximity sensor. The ambient light sensor may adjust luminance of the display panel 8061 based on brightness of ambient light. The proximity sensor may turn off the display panel 8061 and/or backlight when the terminal device 800 approaches an ear. As a type of motion sensor, an accelerometer sensor may detect an acceleration value in each direction (generally, three axes), and detect a value and a direction of gravity when the accelerometer sensor is static, and may be configured to recognize a terminal posture (such as switching between landscape and portrait modes, a related game, or magnetometer posture calibration), and perform a function related to vibration recognition (such as a pedometer or a knock), and the like. The sensor 805 may further include a fingerprint sensor, a pressure sensor, an iris sensor, a molecular sensor, a gyroscope, a barometer, a hygrometer, a thermometer, an infrared sensor, and the like. Details are not described herein again.

The display unit 806 is configured to display information entered by a user or information provided for the user. The display unit 806 may include a display panel 8061. The display panel 8061 may be configured in a form of a liquid crystal display (Liquid Crystal Display, LCD), an organic light-emitting diode (Organic Light-Emitting Diode, OLED), or the like.

The user input unit 807 may be configured to receive inputted digit or character information and generate key signal input related to user setting and function control of the terminal. Specifically, the user input unit 807 includes a touch panel 8071 and another input device 8072. The touch panel 8071 is also referred to as a touchscreen, and may collect a touch operation of the user on or near the touch panel (for example, an operation performed on or near the touch panel 8071 by the user by using any appropriate object or accessory such as a finger or a stylus). The touch panel 8071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 810, and can receive and execute a command sent by the processor 810. In addition, the touch panel 8071 can be implemented in various types such as resistive, capacitive, infrared, and surface acoustic waves. The user input unit 807 may further include other input devices 8072 in addition to the touch panel 8071. Specifically, the other input devices 8072 may include but are not limited to a physical keyboard, a function key (such as a volume control key or a power on/off key), a trackball, a mouse, a joystick, and the like. Details are not described herein.

Further, the touch panel 8071 can cover the display panel 8061. When detecting a touch operation on or near the touch panel 8071, the touch panel 8071 transmits the touch operation to the processor 810 to determine a type of a touch event. Then, the processor 810 provides corresponding visual output on the display panel 8061 based on the type of the touch event. In FIG 8, the touch panel 8071 and the display panel 8061 are used as two independent components to implement input and output functions of the terminal. However, in some embodiments, the touch panel 8071 and the display panel 8061 may be integrated to implement the input and output functions of the terminal. This is not specifically limited herein.

The interface unit 808 is an interface for connecting an external apparatus to the terminal device 800. For example, the external apparatus can include a wired or wireless headphone port, an external power supply (or a battery recharger) port, a wired or wireless data port, a memory card port, a port for connection with an apparatus having an identification module, an audio input/output (I/O) port, a video I/O port, an earphone port, and the like. The interface unit 808 may be configured to receive input (for example, data information and power) from the external apparatus and transmit the received input to one or more elements in the terminal 800, or may be configured to transmit data between the terminal 800 and the external apparatus.

The memory 809 may be configured to store software programs and various data. The memory 809 may mainly include a program storage area and a data storage area. The program storage area may store an operating system, an application program required for at least one function (such as a sound play function and an image play function), and the like. The data storage area may store data created based on use of the mobile phone (such as audio data and a phone book), and the like. In addition, the memory 809 may include a high-speed random access memory, and may further include a non-volatile memory such as at least one magnetic disk storage component, a flash memory component, or another volatile solid-state storage component.

The processor 810 is a control center of the terminal, and is connected to all parts of the entire terminal by using various interfaces and lines, and performs various functions of the terminal and processes data by running or executing the software program and/or the module that are stored in the memory 809 and invoking the data stored in the memory 809, to implement overall monitoring on the terminal. The processor 810 may include one or more processing units. Optionally, the processor 810 may integrate an application processor and a modem processor. The application processor mainly deals with an operating system, a user interface, and an application program. The modem processor mainly deals with wireless communication. It can be understood that alternatively, the modem processor may not be integrated into the processor 810.

The terminal device 800 may further include the power supply 811 (such as a battery) supplying power to each component. Preferably, the power supply 811 may be logically connected to the processor 810 by using a power management system, so as to implement functions such as charging management, discharging management and power consumption management by using the power management system.

In addition, the terminal 800 may further include some functional modules not shown. Details are not described herein again.

Some embodiments of the present disclosure further provide a network device, including a processor, a memory, and a computer program stored on the memory and executable by the processor. When the computer program is executed by the processor, the processes of the foregoing embodiment of the connection establishment method applied to a network device are implemented, and the same technical effects can be achieved. To avoid repetition, details are not described herein again.

Specifically, FIG 9 is a schematic diagram of a hardware structure of a network device according to various embodiments of the present disclosure. The network device 90 includes but is not limited to a bus 91, a transceiver 92, an antenna 93, a bus interface 94, a processor 95, and a memory 96.

In some embodiments of the present disclosure, the network device 90 further includes: a computer program stored on the memory 96 and executable by the processor 95. When the computer program is executed by the processor 95, the following steps are performed:
receiving a first request message sent by a first terminal device, where the first request message is used to request, from a network device, related information of a unicast connection between the first terminal device and a second terminal device; and
sending a first response message to the first terminal device.

The transceiver 92 is configured to receive and send data under control of the processor 95.

In FIG 9, for a bus architecture (represented by the bus 91), the bus 91 may include any quantity of interconnecting buses and bridges, and the bus 91 interconnects various circuits of one or more processors represented by the processor 95 and a memory represented by the memory 96. The bus 91 may further link together various other circuits, such as a peripheral device, a voltage regulator, and a power management circuit. These are all well known in the art. Therefore, this specification provides no further description. The bus interface 94 provides an interface between the bus 91 and the transceiver 92. The transceiver 92 may be one or more elements, for example, a plurality of receivers and transmitters, and provides a unit that is configured to communicate with various other apparatuses on a transmission medium. Data processed by the processor 95 is transmitted on a wireless medium by using the antenna 93. The antenna 93 further receives data and transmits the data to the processor 95.

The processor 95 is responsible for managing the bus 91 and general processing, and may further provide various functions, including timing, peripheral interfacing, voltage regulation, power management, and another control function. The memory 96 may be configured to store data used by the processor 95 when performing an operation.

Optionally, the processor 95 may be a CPU, an ASIC, an FPGA, or a CPLD.

Some embodiments of the present disclosure further provide a computer-readable storage medium having a computer program stored thereon, where when the computer program is executed by a processor, the processes of the foregoing embodiment of the connection establishment method applied to a first terminal device, or the processes of the foregoing embodiment of the connection establishment method applied to a transmitting-end device, or the processes of the foregoing embodiment of the connection establishment method applied to a network device are implemented.

The computer-readable storage medium is, for example, a read-only memory (Read-Only Memory, ROM for short), a random access memory (Random Access Memory, RAM for short), a magnetic disk, an optical disc, etc.

It should be noted that, in this specification, the terms "include", "include", or any of their variants are intended to cover a non-exclusive inclusion, so that a process, a method, an article, or an apparatus that includes a list of elements not only includes those elements but also includes other elements that are not expressly listed, or further includes elements inherent to such a process, method, article, or apparatus. An element limited by "includes a ..." does not, without more constraints, preclude the presence of additional identical elements in the process, method, article, or apparatus that includes the element.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of the present disclosure essentially or the part contributing to the related art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of the present disclosure.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present disclosure.

Persons skilled in the art can clearly understand that to describe conveniently and concisely, for a specific working process of the system, apparatus, and unit described above, refer to the corresponding process in the foregoing method embodiments. Details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of the present disclosure may be integrated into one processing unit, or each of the units may exist alone physically, or two or more units are integrated into one unit.

If the function is implemented in the form of software function units and sold or used as independent products, the function may be stored in a computer-readable storage medium. Based on this understanding, the essence of the technical solutions of the present disclosure, or the part contributing to the prior art, or some of the technical solutions may be represented in the form of software products. The computer software products are stored in a storage medium, and include a number of instructions to enable a computer device (which may be a personal computer, a server, a network device, or the like) to perform all or some of the steps of the methods described in various embodiments of the present disclosure. The storage medium includes various mediums, such as a USB flash disk, a removable hard disk, a ROM, a RAM, a magnetic disk, or an optical disc, that can store program code.

Those of ordinary skill in the art can understand that some or all processes of the realization of the foregoing method in the embodiments can be implemented by controlling relevant hardware by the computer program. The foregoing program may be stored on a computer-readable storage medium, where when the program is executed, the processes of the embodiments of the foregoing methods can be included. The foregoing storage medium may include: a magnetic disk, an optical disc, a read-only memory (Read-Only Memory, ROM), a random access memory (Random Access Memory, RAM), or the like.

It can be understood that those embodiments described in the embodiments of the present disclosure can be implemented by hardware, software, firmware, middleware, microcode, or a combination thereof. For implementation with hardware, the processing unit can be implemented in one or more application specific integrated circuits (Application Specific Integrated Circuits, ASIC), a digital signal processor (Digital Signal Processing, DSP), a digital signal processing device (DSP Device, DSPD), a Programmable Logic Device (Programmable Logic Device, PLD), a PFGA (Field-Programmable Gate Array, FPGA), a general-purpose processor, a controller, a microcontroller, a microprocessor, and other electronic units for implementing the functions of the present disclosure, or a combination thereof.

For implementation with software, technologies described in the embodiments of the present disclosure may be implemented by executing functional modules (for example, a process and a function) in the embodiments of the present disclosure. Software code can be stored in the memory and executed by the processor. The memory can be implemented inside or outside the processor.

The embodiments of the present disclosure are described above with reference to the accompanying drawings, but the present disclosure is not limited to the foregoing specific implementations. The foregoing specific implementations are merely exemplary instead of restrictive. Under enlightenment of the present disclosure, a person of ordinary skills in the art may make many forms without departing from the aims of the present disclosure and the protection scope of claims, all of which fall within the protection of the present disclosure.

## Claims

1. A connection establishment method, applied to a first terminal device and comprising:
sending a first request message to a network device, wherein the first request message is used to request, from the network device, related information of a unicast connection between the first terminal device and a second terminal device; and
receiving a first response message sent by the network device.

2. The method according to claim 1, wherein the first request message is a resource request message, and the resource request message comprises at least one of the following:
a target terminal ID;
a link ID of the unicast connection;
resource related information of a target terminal;
quality of service QoS parameter information negotiated between the first terminal device and the second terminal device;
capability information of the target terminal;
physical cell ID and frequency information of the target terminal;
a physical cell ID of the target terminal; and
a cell global ID of the target terminal;
or
the first request message is a unicast connection establishment request message, and the unicast connection establishment request message comprises at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal;
a cell global ID of the target terminal; and
a vehicle-to-everything V2X unicast connection establishment request cause, wherein
the target terminal is at least one of the first terminal device and the second terminal device.

3. The method according to claim 2, wherein the resource related information of the target terminal comprises at least one of the following:
information about a resource mode in which the target terminal currently works;
information about a resource pool selected by the target terminal;
information about a resource use status of the target terminal; and
information about a current radio resource control state of the target terminal.

4. The method according to claim 1, wherein the first response message is an RRC configuration message or a unicast connection establishment message; and
the first response message comprises at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, wherein
the target terminal is at least one of the first terminal device and the second terminal device.

5. The method according to claim 4, wherein the resource configuration information comprises at least one of the following:
information about a transmitting resource for feedback control information of a sidelink;
information about a transmitting resource for control signaling; and
information about a transmitting resource for service data.

6. The method according to claim 1, wherein when the network device does not send configuration information to the second terminal device, the method further comprises:
sending a second RRC message to the second terminal device, wherein
the second RRC message comprises at least one of the following:
radio bearer configuration information of a target terminal;
resource configuration information of the second terminal device;
physical layer configuration information of the second terminal device;
a link ID corresponding to the radio bearer configuration information; and
a group of first terminal device IDs and second terminal device IDs corresponding to the radio bearer configuration information, wherein
the target terminal is at least one of the first terminal device and the second terminal device.

7. The method according to claim 1, wherein when the network device sends a first RRC message to the second terminal device, the method further comprises:
sending a third RRC message to the second terminal device, wherein
the first RRC message comprises at least one of the following:
resource configuration information of the second terminal device; and
physical layer configuration information of the second terminal device; and
the third RRC message comprises at least one of the following:
radio bearer configuration information of a target terminal;
a link ID corresponding to the radio bearer configuration information; and
a group of first terminal device IDs and second terminal device IDs corresponding to the radio bearer configuration information, wherein
the target terminal is at least one of the first terminal device and the second terminal device.

8. The method according to any one of claims 2 to 7, wherein the target terminal ID comprises at least one of the following:
an upper-layer ID, a layer 2 ID, a physical layer ID, an international mobile subscriber identity IMSI, a 5G-S-TMSI, a Source ID, and a Destination ID.

9. The method according to claim 1, wherein the first response message is an RRC reject message or a unicast connection reject message; and
the first response message comprises at least one of the following:
indication information indicating whether to reject QoS;
a connection reject cause; and
information about a wait time.

10. The method according to claim 9, wherein the method further comprises:
sending an upper-layer connection release message or a unicast connection establishment failure message to the second terminal device.

11. The method according to claim 1, wherein the first terminal device is a transmitting-end device, and the second terminal device is a receiving-end device;
before the sending a first request message to a network device, the method further comprises:
sending a direct communication request message to the second terminal device; and
receiving a direct communication accept message sent by the second terminal device;
or
before the sending a first request message to a network device, the method further comprises:
sending, to the network device, a direct communication request message for the second terminal device; and
receiving a direct communication accept message for the first terminal device that is sent by the network device; or
when the first request message is a unicast connection establishment request message and the first response message is a unicast connection establishment message, the unicast connection establishment request message comprises a direct communication request message, and the unicast connection establishment message comprises a direct communication accept message.

12. The method according to claim 1, wherein the first terminal device is a receiving-end device, and the second terminal device is a transmitting-end device;
before the sending a first request message to a network device, the method further comprises:
receiving a direct communication request message sent by the second terminal device; and
after the receiving a first response message sent by the network device, the method further comprises:
sending a direct communication accept message to the second terminal device;
or
before the sending a first request message to a network device, the method further comprises:
receiving a direct communication request message of the second terminal device for the first terminal device that is sent by the network device; and
after the receiving a first response message sent by the network device, the method further comprises:
sending, to the network device, a direct communication accept message for the second terminal device;
or
before the sending a first request message to a network device, the method further comprises:
receiving a unicast connection establishment request message sent by the second terminal device, wherein the unicast connection establishment request message comprises a direct communication request message; and
after the receiving a first response message sent by the network device, the method further comprises:
sending a unicast connection establishment message to the second terminal device, wherein the unicast connection establishment message comprises a direct communication accept message.

13. The method according to claim 11 or 12, wherein the direct communication request message comprises at least one of the following:
information about a requested QoS parameter;
a target terminal ID;
sidelink service information;
V2X service information;
resource related information of the transmitting-end device;
physical cell ID and frequency information of the transmitting-end device;
a physical cell ID of the transmitting-end device;
a cell global ID of the transmitting-end device;
user information of the target terminal;
IP address configuration information of the transmitting-end device; and
security related information of the transmitting-end device, wherein
the target terminal is at least one of the first terminal device and the second terminal device.

14. The method according to claim 11 or 12, wherein the direct communication accept message comprises at least one of the following:
information about an accepted QoS parameter;
resource related information of the receiving-end device;
physical cell ID and frequency information of the receiving-end device;
a physical cell ID of the receiving-end device;
a cell global ID of the receiving-end device;
a target terminal ID;
a link ID of the unicast connection;
user information of the target terminal; and
IP address configuration information of the receiving-end device, wherein
the target terminal is at least one of the first terminal device and the second terminal device.

15. A connection establishment method, applied to a transmitting-end device and comprising:
sending a unicast connection establishment request message to a receiving-end device, wherein the unicast connection establishment request message comprises a direct communication request message, and the unicast connection establishment request message is used to request related information of a unicast connection between the transmitting-end device and the receiving-end device;
receiving a unicast connection establishment message sent by the receiving-end device, wherein the unicast connection establishment message comprises a direct communication accept message;
sending a resource request message to a network device; and
receiving an RRC configuration message sent by the network device.

16. The method according to claim 15, wherein after the receiving an RRC configuration message sent by the network device, the method further comprises:
sending a unicast connection establishment complete message to the receiving-end device.

17. The method according to claim 15, wherein the unicast connection establishment request message comprises at least one of the following:
a transmitting-end device ID;
a link ID of the unicast connection;
resource related information of the transmitting-end device;
information about a requested QoS parameter;
capability information of the transmitting-end device;
physical cell ID and frequency information of the transmitting-end device;
a physical cell ID of the transmitting-end device;
a cell global ID of the transmitting-end device; and
a V2X unicast connection establishment request cause.

18. The method according to claim 15, wherein the unicast connection establishment message comprises at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, wherein
the target terminal is at least one of the first terminal device and the second terminal device.

19. A connection establishment method, applied to a network device and comprising:
receiving a first request message sent by a first terminal device, wherein the first request message is used to request, from the network device, related information of a unicast connection between the first terminal device and a second terminal device; and sending a first response message to the first terminal device.

20. The method according to claim 19, wherein the first request message is a resource request message, and the resource request message comprises at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal; and
a cell global ID of the target terminal;
or
the first request message is a unicast connection establishment request message, and the unicast connection establishment request message comprises at least one of the following:
a target terminal ID;
a link ID of the unicast connection;
resource related information of a target terminal;
QoS parameter information negotiated between the first terminal device and the second terminal device;
capability information of the target terminal;
physical cell ID and frequency information of the target terminal;
a physical cell ID of the target terminal;
a cell global ID of the target terminal; and
a V2X unicast connection establishment request cause, wherein
the target terminal is at least one of the first terminal device and the second terminal device.

21. The method according to claim 20, wherein the resource related information of the target terminal comprises at least one of the following:
information about a mode in which the target terminal currently works;
information about a resource pool selected by the target terminal;
information about a resource use status of the target terminal; and
information about a current RRC state of the target terminal.

22. The method according to claim 19, wherein the first response message is an RRC configuration message or a unicast connection establishment message; and
the first response message comprises at least one of the following:
radio bearer configuration information of a target terminal;
resource configuration information of the target terminal;
physical layer configuration information of the target terminal;
indication information indicating whether to accept QoS;
information about an accepted QoS parameter;
a link ID corresponding to the radio bearer configuration information; and
a group of first terminal device IDs and second terminal device IDs corresponding to the radio bearer configuration information, wherein
the target terminal is at least one of the first terminal device and the second terminal device.

23. The method according to claim 22, wherein the resource configuration information comprises at least one of the following:
information about a transmitting resource for feedback control information of a sidelink;
information about a transmitting resource for control signaling; and
information about a transmitting resource for service data.

24. The method according to claim 19, wherein after the receiving a first request message sent by the first terminal device, the method further comprises:
sending a first RRC message to the second terminal device, wherein
the first RRC message comprises at least one of the following:
resource configuration information of the second terminal device; and
physical layer configuration information of the second terminal device; and
or
the first RRC message comprises at least one of the following:
radio bearer configuration information of a target terminal;
resource configuration information of the second terminal device; and
physical layer configuration information of the second terminal device; and
a link ID corresponding to the radio bearer configuration information; and
a group of first terminal device IDs and second terminal device IDs corresponding to the radio bearer configuration information, wherein
the target terminal is at least one of the first terminal device and the second terminal device.

25. The method according to any one of claims 20 to 24, wherein the target terminal ID comprises at least one of the following:
an upper-layer ID, a layer 2 ID, a physical layer ID, an international mobile subscriber identity IMSI, a 5G-S-TMSI, a source ID, and a destination ID.

26. The method according to claim 19, wherein the first response message is an RRC reject message or a unicast connection reject message; and
the first response message comprises at least one of the following:
indication information indicating whether to reject QoS;
a connection reject cause; and
information about a wait time.

27. The method according to claim 19, wherein the first terminal device is a transmitting-end device, and the second terminal device is a receiving-end device;
before the receiving a first request message sent by the first terminal device, the method further comprises: receiving a direct communication request message for the second terminal device that is sent by the first terminal device; and
sending a direct communication accept message for the first terminal device to the first terminal device; or
when the first request message is a unicast connection establishment request message and the first response message is a unicast connection establishment message, the unicast connection establishment request message comprises a direct communication request message, and the unicast connection establishment message comprises a direct communication accept message.

28. The method according to claim 19, wherein the first terminal device is a receiving-end device, and the second terminal device is a transmitting-end device;
before the receiving a first request message sent by the first terminal device, the method further comprises: sending a direct communication request message for the first terminal device to the first terminal device; and
after the sending a first response message to the first terminal device, the method further comprises:
receiving a direct communication accept message for the second terminal device that is sent by the first terminal device.

29. The method according to claim 27 or 28, wherein the direct communication request message comprises at least one of the following:
information about a requested QoS parameter;
a target terminal ID;
sidelink service information;
V2X service information;
resource related information of the transmitting-end device;
physical cell ID and frequency information of the transmitting-end device;
a physical cell ID of the transmitting-end device;
a cell global ID of the transmitting-end device;
user information of the target terminal;
IP address configuration information of the transmitting-end device; and
security related information of the transmitting-end device, wherein
the target terminal is at least one of the transmitting-end device and the receiving-end device.

30. The method according to claim 27 or 28, wherein the direct communication accept message comprises at least one of the following:
information about an accepted QoS parameter;
resource related information of the receiving-end device;
physical cell ID and frequency information of the receiving-end device;
a physical cell ID of the receiving-end device;
a cell global ID of the receiving-end device;
a target terminal ID;
a link ID of the unicast connection;
user information of the target terminal; and
IP address configuration information of the receiving-end device, wherein
the target terminal is at least one of the transmitting-end device and the receiving-end device.

31. A first terminal device, comprising:
a first sending module configured to send a first request message to a network device, wherein the first request message is used to request, from the network device, related information of a unicast connection between the first terminal device and a second terminal device; and
a first receiving module configured to receive a first response message sent by the network device.

32. A transmitting-end device, comprising:
a second sending module configured to send a unicast connection establishment request message to a receiving-end device, wherein the unicast connection establishment request message comprises a direct communication request message, and the unicast connection establishment request message is used to request related information of a unicast connection between the transmitting-end device and the receiving-end device;
a second receiving module configured to receive a unicast connection establishment message sent by the receiving-end device, wherein the unicast connection establishment message comprises a direct communication accept message;
a third sending module configured to send a resource request message to a network device; and
a third receiving module configured to receive an RRC configuration message sent by the network device.

33. A network device, comprising:
a fourth receiving module configured to receive a first request message sent by a first terminal device, wherein the first request message is used to request, from the network device, related information of a unicast connection between the first terminal device and a second terminal device; and
a fourth sending module configured to send a first response message to the first terminal device.

34. A terminal device, comprising a memory, a processor, and a program stored on the memory and executable by the processor, wherein when the program is executed by the processor, the steps of the connection establishment method according to any one of claims 1 to 18 are implemented.

35. A network device, comprising a memory, a processor, and a program stored on the memory and executable by the processor, wherein when the program is executed by the processor, the steps of the connection establishment method according to any one of claims 19 to 30 are implemented.

36. A computer-readable storage medium having a computer program stored thereon, wherein when the computer program is executed by a processor, the steps of the connection establishment method according to any one of claims 1 to 18 or the steps of the connection establishment method according to any one of claims 19 to 30 are implemented.
